# EUROPÄISCHE PATENTSCHRIFT

(11) **EP 1 417 426 B1**
(45) Veröffentlichungstag und Bekanntmachung des Hinweises auf die Patenterteilung: **02.11.2006**
(21) Anmeldenummer: 02794790.2
(22) Anmeldetag: 14.08.2002
(51) Int. Cl.: F16H 3/72, F16H 3/66, B60K 6/04

(54) **AUTOMATISCH SCHALTBARES FAHRZEUGGETRIEBE**
AUTOMATIC TRANSMISSION FOR MOTOR VEHICLES
TRANSMISSION AUTOMATIQUE POUR VEHICULE A MOTEUR

(30) Priorität: 17.08.2001 DE 10140424
(43) Veröffentlichungstag der Anmeldung: 12.05.2004
(73) Patentinhaber: ZF FRIEDRICHSHAFEN Aktiengesellschaft, 88038 Friedrichshafen (DE)
(72) Erfinder: HEITMANN, Axel, 88045 Friedrichshafen (DE); DREIBHOLZ, Ralf, 88074 Meckenbeuren (DE); GUMPOLTSBERGER, Gerhard, 88045 Friedrichshafen (DE)
(86) Internationale Anmeldenummer: PCT/EP2002/009089
(87) Internationale Veröffentlichungsnummer: WO 2003/016749

(56) Entgegenhaltungen:
- US-A- 5 903 061
- US-A- 6 081 042
- PROF. DR. P. TENBERGE: "E-Automat Automatikgetriebe mit Esprit" VDI-BERICHTE, 2001, Seiten 455-479, XP008010754 in der Anmeldung erwähnt
- LEPELLETIER P: "TRANSMISSION AUTOMATIQUE ULTRA-COMPACTE A 5 OU 6 VITESSES POUR VOITURES PARTICULIERES" INGENIEURS DE L'AUTOMOBILE, RAIP. BOULOGNE, FR, Nr. 678, 1993, Seiten 16-17, XP000345697 ISSN: 0020-1200
- TENBERGE P ET AL: "MECHANISCH-ELEKTRISCHE FAHRZEUGGETRIEBE IM VERGLEICH" VDI BERICHTE, DUESSELDORF, DE, Nr. 1393, 1998, Seiten 551-577, XP000866558 ISSN: 0083-5560

## Beschreibung

Die Erfindung betrifft ein automatisch schaltbares Fahrzeuggetriebe mit einer Antriebswelle, welche mit einer Verbrennungskraftmaschine verbindbar ist, und einer mit wenigstens einer Fahrzeugachse verbindbaren Abtriebswelle sowie einem mechanischen Schaltgetriebe mit einem ersten und einem zweiten Planetenradsatz, wobei der erste Planetenradsatz als einfacher Planetenradsatz und der zweite als doppelter Planetenradsatz, insbesondere als Ravigneaux-Satz, ausgebildet ist. Ferner sind Schaltelemente zum Schalten mehrerer Vorwärtsgänge und eines Rückwärtsganges vorgesehen sowie eine elektrische Maschine, welche als Starter/Generator und/oder zum stufenlosen Verstellen der Drehzahl des Schaltgetriebes und/oder zum wenigstens teilweise elektrischen Fahrbetrieb eines Fahrzeugs einsetzbar ist.

Ein automatisches Mehrgang-Getriebe mit einem mechanischen Schaltgetriebe der vorbeschriebenen Art ist beispielsweise aus der EP 434 525 B1 bekannt. Dieses Getriebe enthält einen Ravigneaux-Satz, welcher um einen Planetenradsatz als Vorschaltgetriebe erweitert ist.

Hybridantriebe für Kraftfahrzeuge sind aus dem Stand der Technik ebenfalls bekannt. Diese teilelektrischen Antriebssysteme weisen als Antriebsaggregate meist eine Verbrennungskraftmaschine auf, mit der eine große Leistungsfähigkeit und Reichweite des Kraftfahrzeugs ermöglicht wird. Ergänzend ist wenigstens eine elektrische Maschine zwischen der Verbrennungskraftmaschine und dem Getriebe angeordnet, welche die Vorteile der Elektroantriebe, wie z. B. Bremsenergierückgewinnung, emissionsfreies Fahren und einen Boost-Betrieb, ermöglichen. Ein derartiger Hybridantrieb ist beispielsweise in der DE 199 17 665 A1 beschrieben. Dieser Hybridantrieb weist in einem Antriebsstrang zwischen einem Verbrennungsmotor und einem mehrgängigen Fahrzeuggetriebe eine erste elektrische Maschine und eine mit einer Getriebeeingangswelle permanent verbundene zweite elektrische Maschine auf. Zwischen den elektrischen Maschinen, welche jeweils als Motor und als Generator betreibbar sind, und dem Verbrennungsmotor ist jeweils eine schaltbare Kupplung angeordnet. Damit ist vorteilhafterweise ein sehr ökonomischer und umweltverträglicher, beim Anfahren rein elektrischer Betrieb bzw. bei niedrigen Fahrzeuggeschwindigkeiten, wie z. B. in einem Stop-and-Go-Betrieb oder bei einem Ein- oder Ausparkvorgang, möglich. Durch Schließen der zweiten Kupplung zwischen Verbrennungsmotor und elektrischer Maschine wird der bereits laufende Verbrennungsmotor zugeschaltet, so dass die volle Fahrzeugleistung zur Verfügung steht.

Ein weiteres Antriebssystem für ein Kraftfahrzeug ist aus der DE 199 23 315 A1 bekannt. Diese beschreibt ein von einem Antriebsaggregat angetriebenes Fahrzeug mit einer Getriebeeinheit und wenigstens eine als Motor und/oder Generator betreibbare elektrische Maschine.

In Ergänzung zu dem vorgenannten 6-Gang-Automatikge-triebe nach EP 434 525 B1 ist außerdem ein Automatikgetriebe mit einer als Starter/Generator ausgebildeten Elektromaschine beschrieben (VDI-Berichte Nr. 1610, 2001, Seiten 455 bis 479, "E-Automat, Automatikgetriebe mit Esprit", Professor Dr. P. Tenberge, Chemnitz), welches zum Schalten von sieben Vorwärtsgängen und einem Rückwärtsgang sowie zum stufenlosen Verändern der Übersetzung in fünf Vorwärtsfahrbereichen vorgesehen ist. Dabei wird in den durch Wegfall des hydrodynamischen Wandlers gewonnenen Platz nun anstelle des Wandlers eine Elektromaschine eingesetzt. Der Anfahrvorgang kann dadurch auf drei verschiedene Arten erfolgen, nämlich rein elektromotorisch oder durch die Verbrennungskraftmaschine mit einer weiteren Bremse als Anfahrelement oder durch die Verbrennungskraftmaschine zusammen mit der Elektromaschine, welche in diesem Fall die Funktion der Bremse übernimmt. Durch Hinzufügen einer Steuereinheit sowie einer Speicherbatterie werden Zusatznutzen erworben, welche in einem komfortablen Start-/Stop-Betrieb, einem teilweise möglichen stufenlosen Fahrbetrieb mit elektrischem Booster, der möglichen Energie-Rekuperation beim Bremsen sowie einem rein elektrischen, emissionsfreien Betrieb liegen. Bei dem vorgenannten E-Automat sind die Verbrennungskraftmaschine und die E-Maschine über einen Planetenradsatz miteinander gekoppelt, so dass der Planetenradsatz das Drehmomentverhältnis der beiden Antriebsaggregate festlegt. Daher kann die E-Maschine das Zusatzmoment nicht unabhängig vom Verbrennungsmotor, beispielsweise zum Boosten, zur Verfügung stellen.

Aus dem der Erfindung nächstkommenden Stand der Technik gemäß EP 0 716 947 A2 ist ein Hybridlastschaltgetriebe bekannt, welches eine Brennkraftenergiequelle und eine elektrische Energiequelle umfaßt. Das Getriebe enthält außerdem eine Mehrbereichs-Planetengetriebeanordnung, eine Kombinations-Planetengetriebeanordnung sowie ein Reibkupplungsmittel zum wahlweisen Verbinden der elektrischen Energiequelle mit den Planetengetriebeanordnungen. Dabei ist die elektrische Maschine mittels zwei weiterer Schaltelemente mit einer ersten oder einer zweiten Welle des ersten Planetenradsatzes verbunden.

Aufgabe der vorliegenden Erfindung ist es, eine vorteilhafte Verschaltungsmöglichkeit zwischen der E-Maschine und dem mechanischen Schaltgetriebe anzugeben, ohne die E-Maschine permanent mit einer Getriebestufe zu verbinden, um so einerseits ein zusätzliches und von dem Verbrennungsmotor unabhängiges Boosten und eine von der Verbrennungskraftmaschine unabhängige Versorgung des elektrischen Bordnetzes sowie andererseits ein Getriebe mit mehr Gangstufen und ein Anfahren aus Geard Neutral zu ermöglichen.

Diese Aufgabe wird durch ein automatisch schaltbares Fahrzeuggetriebe der vorgenannten Art mit den Merkmalen des Anspruchs 1 erreicht. Durch den erfindungsgemäßen Einsatz eines doppelten Planetenradsatzes, insbesondere eines Ravigneaux-Satzes, sowie der zusätzlichen Schaltelemente, beispielsweise Kupplungen, gelingt es einerseits, nach dem Anlassen des Verbrennungsmotors die E-Maschine mittels des ersten Schaltelements direkt mit der Hohlradwelle des ersten Planetenradsatzes zu verbinden, wobei diese Hohlradwelle der Getriebeeingangswelle entspricht. Dadurch wird vorteilhafterweise ein uneingeschränkter Boost-Betrieb als auch eine permanente Versorgung des elektrischen Bordnetzes ermöglicht.

Andererseits ist die E-Maschine durch das zweite Schaltelement direkt mit dem Sonnenrad des ersten Planetenradsatzes, insbesondere mit der Sonnenradwelle des ersten Planetenradsatzes, verbindbar. Da die beiden Schaltelemente beispielsweise als Lamellenkupplungen ausgebildet und unabhängig voneinander schalt- bzw. regelbar sind, kann das erste Schaltelement geöffnet sein und durch Schließen des zweiten Schaltelements mittels der E-Maschine ein stufenloses Verstellen der Drehzahl des ersten Planetenradsatzes erreicht werden.

Durch Schließen beider Schaltelemente kann außerdem der erste Planetenradsatz verblockt werden, so dass zwei zusätzliche Vorwärts- sowie ein zusätzlicher Rückwärtsgang schaltbar sind. Dadurch sind mit dem erfindungsgemäßen Getriebe vorteilhafterweise neun Vorwärts- und zwei Rückwärtsgangstufen schaltbar sowie fünf Fahrbereiche stufenlos verstellbar.

Alternativ zu den vorgenannten Lamellenkupplungen können die Schaltelemente auch als unabhängig voneinander schaltbare, formschlüssige Kupplung oder auch ein Schaltelement als Freilauf ausgebildet sein.

Vorteilhafterweise sind die E-Maschine und die Schaltelemente koaxial zur Eingangswelle und die Schaltelemente radial zwischen der E-Maschine und der Eingangswelle angeordnet, so dass eine raumsparende Anordnung der beiden zusätzlichen Schaltelemente vorgeschlagen ist.

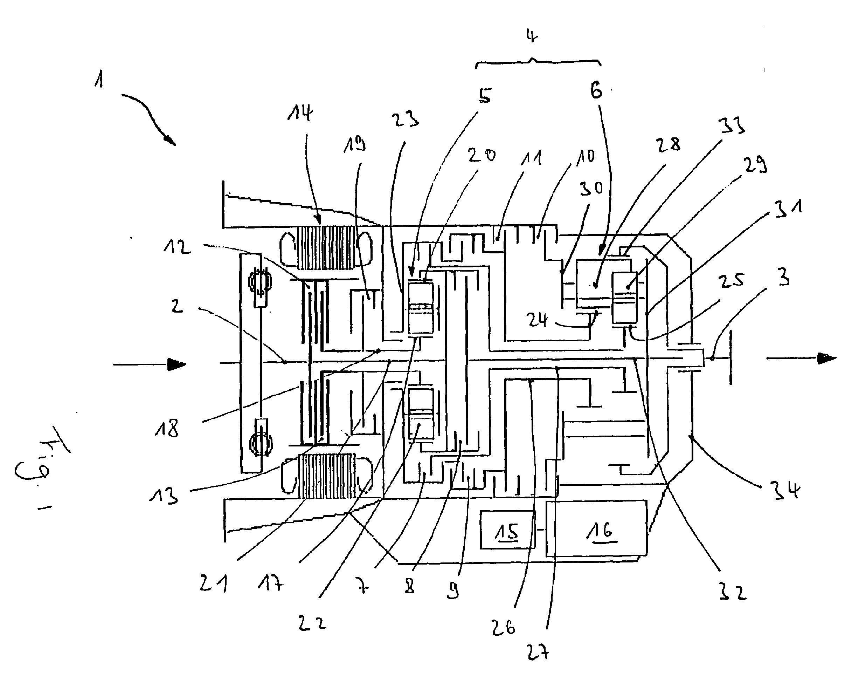

Die einzige Figur zeigt ein automatisch schaltbares Fahrzeuggetriebe 1 gemäß der vorliegenden Erfindung. Dieses Getriebe 1 besteht im wesentlichen aus einer Antriebswelle 2, welche eingangsseitig beispielsweise über einen Torsionsdämpfer mit einer nicht dargestellten Verbrennungskraftmaschine in Verbindung steht. Ausgangsseitig ist eine Abtriebswelle 3 vorgesehen, welche mit mindestens einer Fahrzeugachse verbindbar ist. Zwischen den beiden Wellen 2 und 3 ist ein Schaltgetriebe 4 angeordnet, welches aus einer ersten Getriebestufe 5 und einer zweiten Getriebestufe 6 mit mehreren Kupplungen 7, 8, 9 und zwei Bremsen 10 und 11 besteht. Die erste Getriebestufe 5 besteht beispielsweise aus einem einfachen Planetenradsatz, welcher einem Ravigneaux-Satz als zweite Getriebestufe 6 vorgeschaltet ist. Eine derartige Anordnung ermöglicht beispielsweise ein Stufen-Automatikgetriebe mit sechs Vorwärtsgängen und einem Rückwärtsgang.

Das Sonnenrad 17 der ersten Getriebestufe 5 ist über eine Sonnenradwelle 18 mit einer Anfahrbremse 19 verbunden, so dass ein mit diesem Getriebe 1 ausgerüstetes Fahrzeug ohne hydrodynamischen Wandler anfahren kann. Eine elektrische Maschine 14 ist als Starter/Generator vorgesehen, wobei dieser elektrischen Maschine 14 ferner ein nicht gezeigtes, elektronisches Steuersystem und eine Speicherbatterie zugeordnet ist.

Durch die Kombination eines Schaltgetriebes 4 mit der elektrischen Maschine 14 ist somit vorteilhafterweise ein Anfahren eines damit ausgerüsteten Fahrzeugs aus Geared Neutral möglich.

Zwischen der elektrischen Maschine 14 einerseits sowie der mit dem Hohlrad 20 des ersten Planetenradsatzes 5 verbundenen Antriebswelle 2 und der Sonnenradwelle 18 andererseits sind nun zwei weitere Schaltelemente, nämlich eine vierte Kupplung 12 und eine fünfte Kupplung 13, vorgesehen. Zum Starten der Verbrennungskraftmaschine wird beispielsweise die Kupplung 13 geschlossen und das Starter-Drehmoment wird über die Sonnenradwelle 18 in die erste Getriebestufe 5 eingeleitet. Dadurch verdoppelt sich das Starter-Drehmoment, welches auf die Antriebswelle 2 übertragen wird. Während des Fahrbetriebs können durch den drehzahlvariablen Eingriff der elektrischen Maschine 14 auf die Sonnenradwelle 18 nicht nur sieben Vorwärtsgänge mit festen Übersetzungen, sondern fünf Vorwärtsfahrbereiche mit stufenlos veränderlicher Übersetzung gewählt werden. Während des Fahr-, insbesondere Bremsbetriebs, kann weiterhin mit der elektrischen Maschine 14 eine Energie-Rekuperation ausgenutzt werden, indem elektrische Energie in dem nicht gezeigten Energie-Speicher zwischengespeichert wird.

Mit einem derartigen Fahrzeuggetriebe kann ein rein elektrischer Fahrbetrieb sowohl vorwärts als auch rückwärts, z. B. beim Rangieren in Innenstädten oder anderen Zonen, realisiert werden, wo ein emissionsfreier Betrieb gewünscht ist.

Durch den Einsatz von zwei weiteren Schaltelementen 12, 13 ist es möglich, nach dem Anlassen der Verbrennungskraftmaschine die elektrische Maschine 14 über die erfindungsgemäße Kupplung 12 mit der Antriebswelle 2 zu verbinden. Die Antriebswelle 2 steht dabei in unmittelbarer Verbindung mit der Kurbelwelle der Verbrennungskraftmaschine. Damit können die Vorteile des vorbeschriebenen Fahrzeuggetriebes 1 mit einem mechanischen Schaltgetriebe 4 und einer elektrischen Maschine 14 um einen wesentlichen Vorteil ergänzt werden, nämlich einem Fahrer auf Wunsch eine Verstärkung des Drehmoments zu ermöglichen, so dass ein uneingeschränkter Boost-Betrieb möglich wird. Ferner steht durch eine derartige Verschaltung eine permanente elektrische Versorgung des elektrischen Bordnetzes im Generatorbetrieb der E-Maschine 14 zur Verfügung.

Durch Schließen beider Schaltelemente 12, 13 läuft der erste Planetenradsatz 5 im Block um, so dass durch die Kombination des ersten und zweiten Planetenradsatzes 5, 6 zwei zusätzliche Vorwärts- und ein zusätzlicher Rückwärtsgang schaltbar sind.

Das Hohlrad 20 des ersten Planetenradsatzes 5 ist über die Hohlradwelle 21 mit der Antriebswelle 2 in ständiger Verbindung. Die Planetenräder 22 sind mit einem Planetenträger 23 verbunden, welcher über die Kupplungen 7, 8, 9 mit dem zweiten Planetenradsatz 6 verbindbar oder über die Bremse 11 mit dem Gehäuse 34 verblockbar ist.

Der zweite, doppelte Planetenradsatz 6 besteht im wesentlichen aus einem ersten Sonnenrad 24 und einem zweiten Sonnenrad 25, welche über eine erste Sonnenradwelle 26 sowie über eine zweite Sonnenradwelle 27 mit dem ersten Planetenradsatz 5 verbindbar oder über die Bremse 11 mit dem Gehäuse 34 verblockbar sind. Ein Satz erster Planetenräder 28 ist an einem ersten Planetenträger 30 gelagert, welcher mittels der Bremse 10 mit dem Gehäuse 34 verblockbar ist. Sowohl die ersten Planetenräder 28 als auch zweite Planetenräder 29 sind über einen zweiten Planetenträger 31 und eine Zwischenwelle 32 mit dem ersten Planetenradsatz 5 verbindbar. Das Hohlrad 33 des zweiten Planetenradsatzes 6 ist direkt verbunden mit der Abtriebswelle 3 des Fahrzeuggetriebes 1.

### Bezugszeichen

- 1: Fahrzeuggetriebe
- 2: Antriebswelle
- 3: Abtriebswelle
- 4: Schaltgetriebe
- 5: erster Planetenradsatz
- 6: zweiter Planetenradsatz (Ravigneaux-Satz)
- 7: erste Kupplung
- 8: zweite Kupplung
- 9: dritte Kupplung
- 10: erste Bremse
- 11: zweite Bremse
- 12: vierte Kupplung
- 13: fünfte Kupplung
- 14: elektrische Maschine
- 15: Pumpe
- 16: Elektromotor
- 17: Sonnenrad
- 18: Sonnenradwelle
- 19: dritte Bremse
- 20: Hohlrad
- 21: Hohlradwelle
- 22: Planetenträger
- 23: Planetenträger
- 24: erstes Sonnenrad
- 25: zweites Sonnenrad
- 26: erste Sonnenradwelle
- 27: zweite Sonnenradwelle
- 28: erste Planetenräder
- 29: zweite Planetenräder
- 30: erster Planetenträger
- 31: zweiter Planetenträger
- 32: Zwischenwelle
- 33: Hohlrad
- 34: Gehäuse

## Patentansprüche

1. Automatisch schaltbares Fahrzeuggetriebe (1) mit einer Antriebswelle (2), welche mit einer Verbrennungskraftmaschine verbindbar ist, und einer mit wenigstens einer Fahrzeugachse verbindbaren Abtriebswelle (3), einem mechanischen Schaltgetriebe (4) mit einem ersten und einem zweiten Planetenradsatz (5, 6), wobei der erste Planetenradsatz (5) ein einfacher Planetenradsatz ist, und mit mehreren Schaltelementen (7, 8, 9, 10, 11, 19) sowie einer elektrischen Maschine (14), welche als Starter/Generator und/oder zum stufenlosen Verstellen des Schaltgetriebes (4) und/oder zum wenigstens teilweise elektrischen Fahrbetrieb eines Fahrzeugs vorgesehen ist, und die elektrische Maschine (14) mittels zwei weiterer Schaltelemente (12, 13) mit einer ersten und/oder einer zweiten Welle des ersten Planetenradsatzes (5) verbindbar ist, **dadurch gekennzeichnet, dass** dem ersten Planetenradsatz (5) ein doppelter Planetenradsatz (6), insbesondere ein Ravigneaux-Satz nachgeschaltet ist und dass mit dem ersten Schaltelement (12) die E-Maschine (14) mit dem Hohlrad (20) des ersten Planetenradsatzes (5) verbindbar ist.

2. Automatisch schaltbares Fahrzeuggetriebe (1) nach Anspruch 1, **dadurch gekennzeichnet, dass** mit dem zweiten Schaltelement (13) die E-Maschine (14) mit dem Sonnenrad (17) des ersten Planetenradsatzes (5) verbindbar ist.

3. Automatisch schaltbares Fahrzeuggetriebe (1) nach einem der Ansprüche 1 oder 2, **dadurch gekennzeichnet, dass** die beiden Schaltelemente (12, 13) als Lamellenkupplungen ausgebildet und unabhängig voneinander schalt- und regelbar sind.

4. Automatisch schaltbares Fahrzeuggetriebe (1) nach einem der Ansprüche 1 oder 2, **dadurch gekennzeichnet, dass** die beiden Schaltelemente als formschlüssige Kupplungen ausgebildet und unabhängig voneinander schaltbar sind.

5. Automatisch schaltbares Fahrzeuggetriebe (1) nach einem der Ansprüche 1 oder 2, **dadurch gekennzeichnet, dass** eines der beiden Schaltelemente als Freilauf ausgebildet ist.

6. Automatisch schaltbares Fahrzeuggetriebe (1) nach einem der vorangehenden Ansprüche, **dadurch gekennzeichnet, dass** die E-Maschine (14) und die Schaltelemente (12, 13) koaxial zur Eingangswelle (2) und dass die Schaltelemente (12, 13) radial zwischen der E-Maschine (14) und der Eingangswelle (2) angeordnet sind.

## Claims

1. Automatically shiftable vehicle transmission (1) having an input shaft (2) connectable to an internal combustion engine, and an output shaft (3) connectable to at least one vehicle axle, a mechanical shift transmission (4) having a first and a second planetary gear set (5, 6), wherein the first planetary gear set (5) is a single planetary gear set, and having a plurality of shift elements (7, 8, 9, 10, 11, 19) as well as an electric machine (14), which is provided as a starter/generator and/or for continuously varying the shift transmission (4) and/or for at least partial electric operation of a vehicle, and the electric machine (14) is connectable by means of two further shift elements (12, 13) to a first and/or a second shaft of the first planetary gear set (5), **characterized in that** disposed downstream of the first planetary gear set (5) is a double planetary gear set (6), in particular a Ravigneaux set, and that by means of the first shift element (12) the electric machine (14) is connectable to the ring gear (20) of the first planetary gear set (5).

2. Automatically shiftable vehicle transmission (1) according to claim 1, **characterized in that** by means of the second shift element (13) the electric machine (14) is connectable to the sun gear (17) of the first planetary gear set (5).

3. Automatically shiftable vehicle transmission (1) according to one of claims 1 or 2, **characterized in that** the two shift elements (12, 13) are designed as multiplate clutches and are shiftable and controllable independently of one another.

4. Automatically shiftable vehicle transmission (1) according to one of claims 1 or 2, **characterized in that** the two shift elements are designed as positive clutches and are shiftable independently of one another.

5. Automatically shiftable vehicle transmission (1) according to one of claims 1 or 2, **characterized in that** one of the two shift elements is designed as a freewheel unit.

6. Automatically shiftable vehicle transmission (1) according to one of the preceding claims, **characterized in that** the electric machine (14) and the shift elements (12, 13) are disposed coaxially with the input shaft (2) and that the shift elements (12, 13) are disposed radially between the electric machine (14) and the input shaft (2).

## Revendications

1. Transmission de véhicule automobile à changement de rapport automatique (1) comprenant un arbre d'entrée (2) qui peut être relié à un moteur à combustion interne et un arbre de sortie (3) pouvant être relié à au moins un arbre du véhicule, une boîte de vitesses mécanique (4) comportant des premier et second trains épicycloïdaux (5, 6), le premier train épicycloïdal (5) étant un train épicycloïdal simple, et plusieurs éléments de commande (7, 8, 9, 10, 11, 19) ainsi qu'une machine électrique (14) qui est prévue en qualité de démarreur/génératrice et/ou pour la variation continue de la boîte de vitesses (4) et/ou pour la propulsion au moins partiellement électrique d'un véhicule, et dans laquelle la machine électrique (14) peut être reliée au moyen de deux autres éléments de commande (12, 13) à un premier et/ou un second arbre du premier train épicycloïdal (5), **caractérisée en ce qu'**un train épicycloïdal double (6), en particulier un train de Ravigneaux, est intercalé en aval du premier train épicycloïdal (5), et **en ce que** la machine électrique (14) peut être reliée à la couronne à denture intérieure (20) du premier train épicycloïdal (5) au moyen du premier élément de commande (12).

2. Transmission de véhicule automobile à changement de rapport automatique (1) selon la revendication 1, **caractérisée en ce que** la machine électrique (14) peut être reliée à la roue planétaire (17) du premier train épicycloïdal (5) au moyen du second élément de commande (13).

3. Transmission de véhicule automobile à changement de rapport automatique (1) selon l'une des revendications 1 ou 2, **caractérisée en ce que** les deux éléments de commande (12, 13) sont constitués par des embrayages à disques et peuvent être commandés et réglés indépendamment l'un de l'autre.

4. Transmission de véhicule automobile à changement de rapport automatique (1) selon l'une des revendications 1 ou 2, **caractérisée en ce que** les deux éléments de commande sont constitués par des embrayages positifs et peuvent être commutés indépendamment l'un de l'autre.

5. Transmission de véhicule automobile à changement de rapport automatique (1) selon l'une des revendications 1 ou 2, **caractérisée en ce que** l'un des deux éléments de commande est constitué par une roue libre.

6. Transmission de véhicule automobile à changement de rapport automatique (1) selon l'une des revendications précédentes, **caractérisée en ce que** la machine électrique (14) et les éléments de commande (12, 13) sont disposés coaxialement à l'arbre d'entrée (2), et **en ce que** les éléments de commande (12, 13) sont disposés radialement entre la machine électrique (14) et l'arbre d'entrée (2).
